# EUROPÄISCHE PATENTSCHRIFT

(11) **EP 3 371 018 B1**
(45) Veröffentlichungstag und Bekanntmachung des Hinweises auf die Patenterteilung: **06.04.2022**
(21) Anmeldenummer: 16790983.7
(22) Anmeldetag: 02.11.2016
(51) Int. Cl.: B60T 11/34, B60T 17/18, B60T 15/50

(54) **DRUCKBEGRENZUNGSVENTIL**
PRESSURE-LIMITING VALVE
SOUPAPE DE LIMITATION DE PRESSION

(30) Priorität: 05.11.2015 DE 102015118963
(43) Veröffentlichungstag der Anmeldung: 12.09.2018
(73) Patentinhaber: KNORR-BREMSE Systeme für Nutzfahrzeuge GmbH, 80809 München (DE)
(72) Erfinder: SCHNITTGER, Karsten, 80935 München (DE); PRINSEN, Fabian, 80634 München (DE)
(86) Internationale Anmeldenummer: PCT/EP2016/076406
(87) Internationale Veröffentlichungsnummer: WO 2017/076889

(56) Entgegenhaltungen:
- CN-U- 201 992 150
- DE-A1- 3 026 283
- DE-A1- 4 012 576
- DE-A1-102008 063 819
- DE-C1- 3 311 816
- GB-A- 969 901

## Beschreibung

Die vorliegende Erfindung betrifft ein Druckbegrenzungsventil mit einem Ventilgehäuse, einem Ventilkolben mit einer Druckbegrenzungsfeder, wobei das Druckbegrenzungsventil insbesondere ein Druckbegrenzungsventil eines Luftaufbereitungssystems für ein Bremssystem für ein Nutzfahrzeug ist.

Im Zusammenhang mit Nutzfahrzeugen sind Luftaufbereitungssysteme für pneumatische Bremssysteme bekannt, bei denen ein Sicherheitsventil für einen druckgeminderten Kreis für einen Druckbegrenzer integriert ist.

Die Luftaufbereitung ist eine zentrale Komponente in einem pneumatischen Bremssystem eines Nutzfahrzeugs, in der die vom Kompressor geförderte öl- und wasserhaltige Luft gefiltert und gereinigt wird. Die komprimierte Luft wird mit dem benötigten Druck und in der richtigen Befüllreihenfolge den verschiedenen Bremskreisen und Luftverbrauchern im Nutzfahrzeug zugeteilt. Im Defektfall werden die einzelnen Bremskreise gegeneinander abgesichert, so dass zur Abbremsung des Nutzfahrzeugs (beispielsweise eines Lastkraftwagens) eine ausreichende Hilfsbremswirkung zur Verfügung steht. Eine elektronische Luftaufbereitung beinhaltet neben einer Steuerelektronik Sensoren und Aktuatoren. Neueste Luftaufbereitungsgeräte beinhalten zusätzlich noch eine elektronische Parkbremse (EPB).

Manche dieser Bremskreise arbeiten dabei auf einem niedrigeren Druckniveau, welches unter dem Druckniveau der anderen Bremskreise liegt.

Mit einem Druckbegrenzungsventil kann dabei der Druck auf das gewünschte niedrige Niveau reduziert werden. Indem die Kraft der Feder des Druckbegrenzers mit einer Einstellschraube justiert wird, kann das gewünschte Druckniveau eingestellt werden. Bei derartigen Druckbegrenzungsventilen sind dabei unterschiedliche Bauformen bekannt. Aus dem Stand der Technik sind insbesondere Druckbegrenzungsventile nach dem Prinzip "Zuschieben" bekannt, bei denen bei einer Drucksteigerung im System der Druckbegrenzer bei dem definierten Schließdruck schließt und so den auslassseitigen Druck begrenzt. Bei einer weiteren Drucksteigerung auf der Einlass-Seite des Druckbegrenzers wird über eine Wirkfläche am Ventils dieser zugeschoben und die Dichtkraft am Ventilsitz erhöht sich. Ein derartiges Druckbegrenzungsventil ist beispielsweise aus der DE 10 2010 947 491 A1 bekannt.

Weitere Druckbegrenzungsventile sind aus der DE 33 11 816 C1, der DE 26 20 135 A1, der DE 41 14 977 A1, der DE 30 26 283 A1, der DE 26 19 769 A1, der DE 26 19 769 A1, der DE 10 2008 063 819 A1 sowie der DE 20 2006 017 517 U1 bekannt, wobei diese Ventile ebenfalls nach dem Prinzip "Zuschieben" arbeiten.

Ein weiteres Prinzip für Druckbegrenzungsventile ist das Prinzip "Zuziehen", wobei bei einer Drucksteigerung im System der Druckbegrenzer bei dem definierten Schließdruck schließt und so den auslassseitigen Druck begrenzt. Bei einer weiteren Drucksteigerung auf der Einlass-Seite des Druckbegrenzers wird über eine Wirkfläche am Kolben eine Kraft erzeugt, die als Zugkraft über den Kolben in den Ventilsitz eingeleitet wird. Die Dichtkraft am Ventilsitz erhöht sich hierdurch.

Aus der DE 43 44 416 A1 ist eine Druckbegrenzungseinrichtung bekannt, die nach dem Prinzip "Zuziehen" arbeitet. Dieses Druckbegrenzungsventil weist jedoch keine Sicherheitsventilfunktion auf.

Es ist die Aufgabe der vorliegenden Erfindung, ein Druckbegrenzungsventil der eingangs genannten Art in vorteilhafter Weise weiterzubilden, insbesondere dahingehend, dass dieses mit geringerem Bauraumbedarf sowie mit weniger Bauteilen gebaut werden kann.

Diese Aufgabe wird erfindungsgemäß gelöst durch ein Druckbegrenzungsventil mit den Merkmalen des Anspruchs 1. Danach ist vorgesehen, dass ein Druckbegrenzungsventil ein Ventilgehäuse, einen Ventilkolben und eine Druckbegrenzungseinstellfeder aufweist, wobei im Ventilgehäuse wenigstens ein Ventileinlass und wenigestens ein Ventilauslass vorgesehen ist, wobei der Ventilkolben eine Öffnungsstellung, bei der der Ventileinlass und der Ventilauslass miteinander verbunden sind, und wenigstens eine Schließstellung, bei der der Ventileinlass und der Ventilauslass von einander getrennt sind, einnehmen kann, wobei der Ventilkolben einen ersten Kolbenring mit einer Dichtfläche und einen zweiten Kolbenring aufweist, wobei in der Schließstellung die Dichtfläche des ersten Kolbenrings gegen einen Gehäuseansatz zugezogen ist durch eine pneumatische Kraft, die auf den zweiten Kolbenring wirkt und die entgegen der Kraft der Druckbegrenzungseinstellfeder gerichtet ist, und wobei weiter im Ventilkolben ein pneumatischer Durchgang zur Ausbildung einer Sicherheitsventilfunktion vorhanden ist, hierdurch ein auf der dem Ventilauslass entgegengesetzten Seite des zweiten Kolbenrings angeordneten federbelasteten Sicherheitsventilkörper verschließbar ist.

Die Erfindung basiert auf dem Grundgedanken, dass in das Druckbegrenzungsventil eine Sicherheitsventilfunktion integriert wird. Durch die Integration einer Sicherheitsventilfunktion in das Druckbegrenzungsventil kann erreicht werden, dass das Druckbegrenzungsventil insgesamt einfacher aufgebaut sein kann und hierdurch auch Teile des Druckbegrenzungsventils und des Sicherheitsventils entfallen können. Bei dem Druckbegrenzungsventil gemäß der Erfindung handelt es sich um ein Druckbegrenzungsventil nach dem Prinzip "Zuziehen", das eine selbstverstärkende Wirkung bei Überschreiten eines vordefinierten Schließdrucks ermöglicht. Bei einer Drucksteigerung im System schließt der Druckbegrenzer bei dem definierten Schließdruck und begrenzt so den auslassseitigen Druckpunkt. Bei einer weiteren Drucksteigerung auf der Einlass-Seite des Druckbegrenzers wird über eine Wirkfläche am Kolben eine Kraft erzeugt, die als Zugkraft über den Kolben in den Ventilsitz eingeleitet wird. Dadurch erhöht sich die Dichtkraft am Ventilsitz und wirkt somit selbstverstärkend. Durch die Integration der Sicherheitsventilfunktion kann im Fehlerfall Druck aus den druckbegrenzten Kreisen unter einem maximal definierten zulässigen Druck gehalten werden. Wird dieser Druck überschritten, so kann der im Druckbegrenzungsventil angeordnete federbelastete Sicherheitsventilkörper öffnen und hierdurch Druck ablassen. Hierdurch wird die Sicherheitsventilfunktion ausgebildet. Durch die Integration der Sicherheitsventilfunktion in das Druckbegrenzungsventil ergibt sich der Vorteil, dass ein geringerer Bauraumbedarf besteht, da das Sicherheitsventil in dem Bauraum des Druckbegrenzers untergebracht ist.

Des Weiteren kann vorgesehen sein, dass der Sicherheitsventilkörper durch die Druckbegrenzungseinstellfeder belastet ist. Hierdurch wird es möglich, dass für die Ausbildung der Sicherheitsventilfunktion mittels des Sicherheitsventilkörpers keine gesonderte Feder für den Sicherheitsventilkörper notwendig ist. Folglich können einige Bauelemente eingespart werden, insbesondere die Feder und auch die Einstellschraube des Sicherheitsventils. Hierdurch lassen sich Kosten sparen.

Außerdem ist möglich, dass der Sicherheitsventilkörper eine Führung aufweist, die in einer Verschlussposition in einer Ausnehmung des zweiten Kolbenrings geführt ist. Durch die Führung des Sicherheitsventilkörpers in einer Ausnehmung des zweiten Kolbenrings kann erreicht werden, dass der Sicherheitsventilkörper relativ zum zweiten Kolbenring und damit zum Ventilkolben eine definierte Bewegung durchführt. Eine robuste Bauweise und eine definierte Einstellbarkeit der Schließcharakteristik werden hierdurch möglich.

Ferner kann vorgesehen sein, dass zumindest in der Schließstellung der Sicherheitsventilkörper mit einer Dichtfläche auf dem zweiten Ventilsitz aufliegt und den pneumatischen Durchgang hierdurch dichtend verschließt. Dadurch wird eine einfache und klein bauende Bauweise des Druckbegrenzungsventils mit der integrierten Sicherheitsventilfunktion ermöglicht und erleichtert.

Des Weiteren kann vorgesehen sein, dass der Grenzdruck, bei dem das Druckbegrenzungsventil in die Schließstellung schaltet, mittels der Druckbegrenzungseinstellfeder und eines Einstellelements einstellbar ist. Denkbar ist insbesondere, dass das Einstellelement eine Einstellschraube ist. Dies ermöglicht eine einfache und robuste Einstellung der Schaltcharakteristik des Druckbegrenzungsventils.

Insbesondere kann vorgesehen sein, dass mittels des Einstellelements die Vorspannung der Druckbegrenzungseinstellfeder einstellbar ist.

Darüber hinaus kann vorgesehen sein, dass der Grenzdruck, bei dem der Sicherheitsventilkörper den pneumatischen Druck frei gibt, mittels der Druckbegrenzungseinstellfeder und eines Einstellelements einstellbar ist. Bei dem Einstellelement kann es sich um das Einstellelement des Druckbegrenzungsventils bzw. die Einstellschraube der Druckbegrenzungseinstellfeder zur Einstellung der Vorspannung der Druckbegrenzungseinstellfeder handeln.

Des Weiteren kann vorgesehen sein, dass der pneumatische Durchgang durch eine Durchgangsbohrung durch den Ventilkolben ausgebildet ist.

Weitere Einzelheiten und Vorteile der Erfindung sollen nun anhand eines in den Zeichnungen dargestellten Ausführungsbeispiels dargestellt werden.

Es zeigen :
- Fig. 1: eine schematische Schnittzeichnung eines erfindungsgemäßen Ausführungsbeispiels eines Druckbegrenzungsventils;
- Fig. 2: eine weitere Schnittdarstellung des Druckbegrenzungsventils gemäß Fig. 1 in der Schließstellung bzw. während der Druckbegrenzung; und
- Fig. 3: eine weitere Schnittdarstellung des Druckbegrenzungsventils gemäß Fig. 1 im Fehlerfall mit geöffnetem Sicherheitsventil

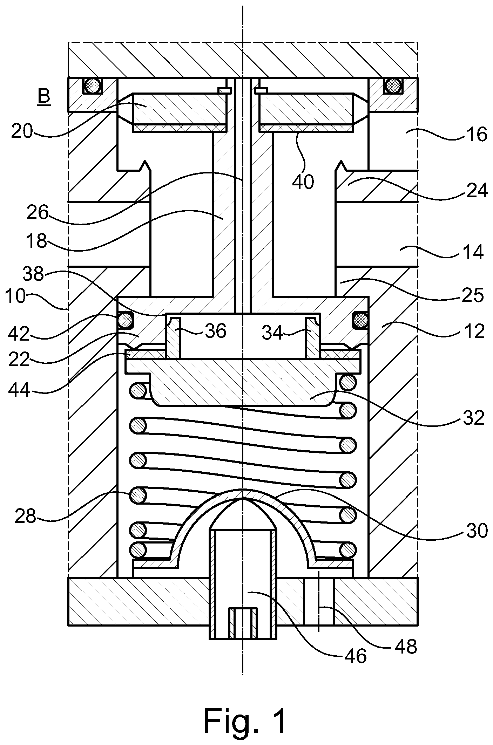

**Fig. 1** zeigt in schematischer Schnittdarstellung eine erfindungsgemäße Ausführungsform eines Druckbegrenzungsventils 10, das nach dem Prinzip "Zuziehen" arbeitet und mit einer Sicherheitsventilfunktion ausgestattet ist.

Das Druckventil 10 ist in der Befüllstellung B gezeigt.

Das Druckbegrenzungsventil 10 weist ein Ventilgehäuse 12 mit einem Ventileinlass 14 und Ventilauslass 16 auf.

Im Ventilgehäuse 12 ist ein Ventilkolben 18 eingeführt, der einen ersten Kolbenring 20 und einen zweiten Kolbenring 22 aufweist.

Um den Ventileinlass 14 herum weist das Ventilgehäuse 12 im Inneren einen Gehäuseansatz 24 auf, der zum Anschlag für den ersten Kolbenring 20 vorgesehen ist.

Wie in der in Fig. 1 gezeigten Ausführungsform dargestellten Arbeitsphase des Befüllens vom Einlass zum Auslass mit Druckluft ist der zweite Kolbenring 22 gegen einen zweiten Gehäuseansatz 25 angeschlagen.

Der Ventilkolben 18 weist einen pneumatischen Durchgang 26 auf, der durch eine Durchgangsbohrung durch den Ventilkolben ausgebildet ist.

Die Durchgangsbohrung ist koaxial mit der Achse des Ventilkolbens 18.

Mittelbar auf den Ventilkolben 18 wirkt eine Druckbegrenzungseinstellfeder 28, die mittels ihrer Federkraft den Ventilkolben 18 federbelastet und deren Federkraft derart ausgerichtert ist, dass bis zum Erreichen eines Grenzdrucks der erste Kolbenring 20 den ersten Gehäuseansatz 24 nicht berührt.

Die Druckbegrenzungseinstellfeder 28 sitzt an ihrem einen Ende auf einer Krafteinleitungskappe 30 auf und an ihrem anderen Ende auf dem Sicherheitsventilkörper 32. Der Sicherheitsventilkörper 32 ist somit federbelastet durch die Druckbegrenzungseinstellfeder 28.

Der Sicherheitsventilkörper 32 selbst ist in einer Führung 34 des zweiten Kolbenrings 22 geführt und sitzt in der in Fig. 1 gezeigten Stellung auf dem zweiten Kolbenring auf.

Die Führung 34 weist einen Durchlass 36 auf, durch den beispielsweise Druckluft hindurch treten kann.

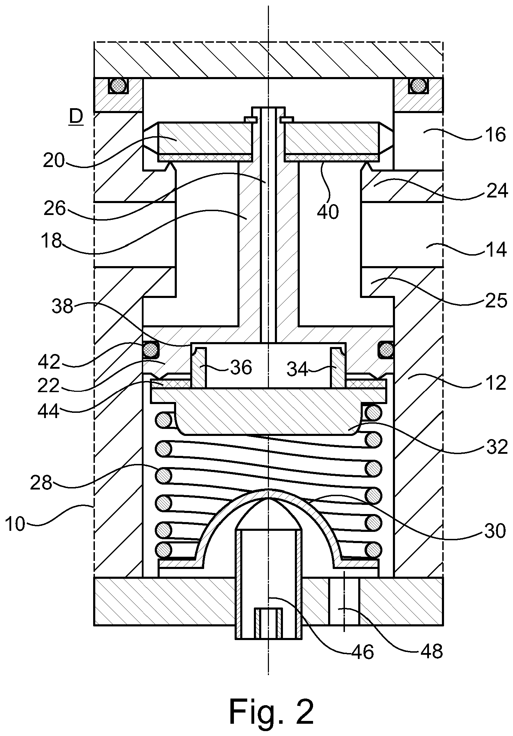

Die Führung 34 ist in der in Fig. 1 und Fig. 2 Stellung in der Ausnehmung 38 des zweiten Kolbenrings 22 geführt.

Der erste Kolbenring 20 weist eine auf einer axial ausgerichteten Fläche, die dem zweiten Kolbenring 22 zugewandt ist, eine Dichtfläche 40 auf.

Der zweite Kolbenring 22 wiederum weist in seiner Umfangsfläche, d.h. radial ausgerichtet, einen Dichtring 42 auf. Der Sicherheitsventilkörper 32 wiederum weist auf einer axial ausgerichteten Fläche, die dem zweiten Kolbenring 22 zugewandt ist, ebenfalls eine Sicherheitsventilkörperdichtfläche 44 auf.

Die Dichtfläche 40, der Dichtring 42 und die Sicherheitsventilkörperdichtfläche 44 können beispielsweise durch aufvulkanisierte Dichtungen ausgebildet sein.

Grundsätzlich ist aber auch denkbar, dass diese Dichtungen auf den Ventilkolben 18 aufgezogene Gummidichtungen sind. Denkbar ist auch, dass der Dichtring 42 als O-Ring ausgebildet ist.

Des Weiteren weist das Druckbegrenzungsventil 10 ein Einstellelement 46 auf, das hier als Einstellschraube 46 abgebildet ist.

Des Weiteren ist im Bereich des Einstellelements 46 auch ein Sicherheitsventilauslass 48 vorgesehen, über den entlüftet werden kann.

Die Funktion des Druckbegrenzungsventils 10 lässt sich wie folgt beschreiben:
In der in Fig. 1 gezeigten Befüllstellung B eines leeren Systems oder mit wenig Druck beaufschlagten Systems ist der zweite Kolbenring 22 gegen den Gehäuseansatz 25 geschoben, und zwar aufgrund der Federkraft der Druckbegrenzungseinstellfeder 28 und auch aufgrund des anliegenden pneumatischen Drucks der über den Ventileinlass 14 einströmenden Druckluft, die gegen die pneumatisch wirksame Fläche des ersten Kolbenrings 20 wirkt. Folglich kann Druckluft über den Ventileinlass 14 zum Ventilauslass 16 strömen. Beim Befüllen eines leeren Systems verbleibt der Ventilkolben 18 so lange in der Position B, bis ab einem gewissen Druck der Ventilkolben anfängt, sich zu bewegen. Der Kolbenring 20 nähert sich dann dem Gehäuseansatz 24 an.

Der Druck, bei dem der Ventilsitz schließt, bestimmt den Begrenzungsdruck des Druckbegrenzungsventils 10. Dies ist auch der Auslegungspunkt des Druckbegrenzungsventils und wird mit dem entsprechenden Einstellelement 46 eingestellt.

Fig. 2 zeigt die Druckbegrenzungsstellung D, die auch eine Schließstellung ist.

In der Schließstellung sind der Ventileinlass 14 und der Ventilauslass 16 voneinander pneumatisch getrennt.

In der Schließstellung ist die Dichtfläche 40 des ersten Kolbenrings 20 gegen den Gehäuseansatz 24 dichtend zugezogen und zwar durch eine pneumatische Kraft, die über den Ventileinlass 14 einströmende Druckluft erzeugt wird. Die pneumatisch wirksamen Flächen am ersten Kolbenring 20 und zweiten Kolbenring 22 erzeugen dabei eine Kraft, die die Kraft der Druckbegrenzungseinstellfeder 28 überwindet.

Der Grenzdruck, bei dem das Druckbegrenzungsventil 10 von der Befüllstellung B in die Druckbegrenzungsstellung D übergeht, kann über die Einstellschraube 46 vorgenommen werden. Durch entsprechende Vorspannung der Druckbegrenzungseinstellfeder 28 über die Einstellschraube 46, die auf die Krafteinleitungskappe 30 wirkt und diese entsprechend der gewünschten Vorspannung gegen die Druckbegrenzungseinstellfeder 28 anstellt bzw. entspannt, kann der Grenzdruck, bei dem das Druckbegrenzungsventil 10 die Druckbegrenzungsstellung D erreicht, eingestellt werden. Dadurch kann auch der Grenzdruck, bei der der Sicherheitsventilkörper 32 den pneumatischen Durchgang 26 freigibt und die Sicherheitsfunktion gegen Überdruck im Gesamtsystem realisiert, eingestellt werden. Die Druckbegrenzungseinstellfeder 28 drückt den Sicherheitsventilkörper 32 gegen den zweiten Kolbenring 22 und zwar derart, dass die Sicherheitsventilkörperdichtfläche 44 am zweiten Kolbenring 22 anliegt. Hierdurch ist zugleich auch der pneumatische Durchgang 26 abgedichtet bzw. dichtend verschlossen.

Das Druckbegrenzungsventil 10 schließt somit bei einem definierten Schließdruck und begrenzt somit den auslassseitigen Druck auf diesen Wert.

Bei einer weiteren Drucksteigerung auf der Einlass-Seite des Druckbegrenzungsventils 10 wird über die Wirkfläche am Ventilkolben 18 eine Kraft erzeugt, die als Zugkraft über den Ventilkolben 18 in den Ventilsitz eingeleitet wird. Dadurch erhöht sich die Dichtkraft am Ventilsitz.

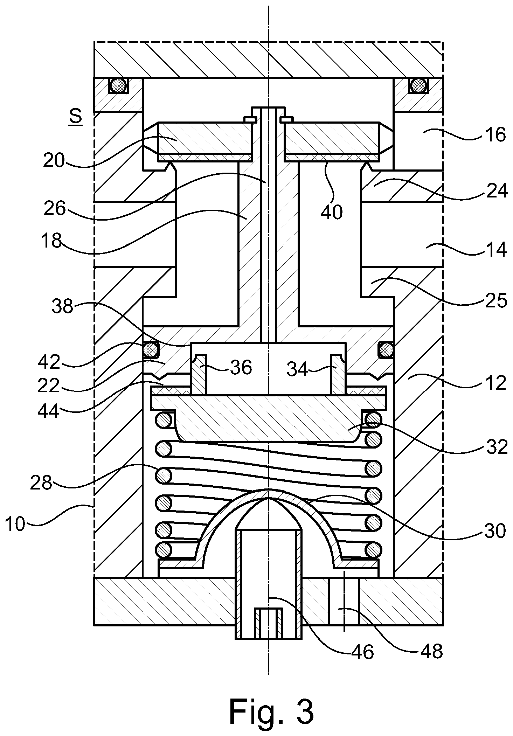

Falls, wie in **Fig. 3** gezeigt, im Fehlerfall der Druck auf der Auslass-Seite weiter steigt, kann dieser Druck über die mittlere Bohrung, d.h. den pneumatischen Durchgang 26 im Ventilkolben 18 des integrierten Sicherheitsventils aufschieben.

Das integrierte Sicherheitsventil nutzt ebenfalls die Druckbegrenzungseinstellfeder und die Einstellschraube 46 des Druckbegrenzungsventils 10. In der in Fig. 3 gezeigten Stellung befindet sich das Druckbegrenzungsventil in der Sicherheitsventilöffnungsstellung S.

### BEZUGSZEICHENLISTE

- 10: Druckbegrenzungsventil
- 12: Ventilgehäuse
- 14: Ventileinlass
- 16: Ventilauslass
- 18: Ventilkolben
- 20: erster Kolbenring
- 22: zweiter Kolbenring
- 24: Gehäuseansatz
- 25: zweiter Gehäuseansatz
- 26: pneumatischer Durchgang
- 28: Druckbegrenzungseinstellfeder
- 30: Krafteinleitungskappe
- 32: Sicherheitsventilkörper
- 34: Führung
- 36: Durchlass
- 38: Ausnehmung
- 40: Dichtfläche
- 42: Dichtring
- 44: Sicherheitsventilkörperdichtfläche
- 46: Einstellelement; Einstellschraube
- 48: Sicherheitsventilauslass

- B: Befüllstellung
- D: Druckbegrenzungsstellung
- S: Sicherheitsventilöffnungsstellung

## Patentansprüche

1. Druckbegrenzungsventil (10) mit einem Ventilgehäuse (12) und mit einem Ventilkolben (18) und mit einer Druckbegrenzungseinstellfeder (28), wobei im Ventilgehäuse (12) wenigstens ein Ventileinlass (14) und wenigstens ein Ventilauslass (16) vorgesehen ist, wobei der Ventilkolben (18) eine Öffnungsstellung (B), bei der der Ventileinlass (14) und der Ventilauslass (16) miteinander verbunden sind, und wenigstens eine Schließstellung (D), bei der der Ventileinlass (14) und der Ventilauslass (16) voneinander getrennt sind, einnehmen kann, wobei der Ventilkolben (18) einen ersten Kolbenring (20) mit einer Dichtfläche (40) und einen zweiten Kolbenring (22) aufweist, **dadurch gekennzeichnet, dass** in der Schließstellung (D) die Dichtfläche (40) des ersten Kolbenrings (20) gegen einen Gehäuseansatz (24) dichtend zugezogen ist durch eine pneumatische Kraft, die auf den ersten Kolbenring (20) und zweiten Kolbenring (22) wirkt und die entgegen der Kraft der Druckbegrenzungseinstellfeder (28) gerichtet ist, und wobei weiter im Ventilkolben (18) ein pneumatischer Durchgang (26) zur Ausbildung einer Sicherheitsventilfunktion vorhanden ist, der durch ein auf der dem Ventilauslass (16) entgegengesetzten Seite des zweiten Kolbenrings (22) angeordneten federbelasteten Sicherheitsventilkörper (32) verschließbar ist.

2. Druckbegrenzungsventil (10) nach Anspruch 1,
**dadurch gekennzeichnet, dass**
der Sicherheitsventilkörper (32) durch die Druckbegrenzungseinstellfeder (28) federbelastet ist.

3. Druckbegrenzungsventil (10) nach Anspruch 1 oder Anspruch 2,
**dadurch gekennzeichnet, dass**
der Sicherheitsventilkörper (32) eine Führung (34) aufweist, die in einer Verschlussposition in einer Ausnehmung (38) des zweiten Kolbenrings (22) geführt ist.

4. Druckbegrenzungsventil (10) nach einem der vorhergehenden Ansprüche, **dadurch gekennzeichnet, dass**
zumindest in der Schließstellung (D) der Sicherheitsventilkörper (32) mit einer Dichtfläche (44) auf dem zweiten Ventilsitz (22) aufliegt und den pneumatischen Durchgang (26) hierdurch dichtend verschließt.

5. Druckbegrenzungsventil (10) nach einem der vorhergehenden Ansprüche, **dadurch gekennzeichnet, dass**
der Grenzdruck, bei dem das Druckbegrenzungsventil in die Schließstellung (D) schaltet, mittels der Druckbegrenzungseinstellfeder (28) und eines Einstellelementes (46) einstellbar ist.

6. Druckbegrenzungsventil (10) nach Anspruch 5,
**dadurch gekennzeichnet, dass**
mittels des Einstellelementes (46) die Vorspannung der Druckbegrenzungseinstellfeder (28) einstellbar ist.

7. Druckbegrenzungsventil (10) nach einem der vorhergehenden Ansprüche, **dadurch gekennzeichnet, dass**
der Grenzdruck, bei dem Sicherheitsventilkörper (32) den pneumatischen Durchgang (26) freigibt, mittels der Druckbegrenzungseinstellfeder (28) und eines Einstellelementes (46) einstellbar ist.

8. Druckbegrenzungsventil (10) nach einem der vorhergehenden Ansprüche, **dadurch gekennzeichnet, dass**
der pneumatische Durchgang (26) durch eine Durchgangsbohrung durch den Ventilkolben (18) ausgebildet ist.

## Claims

1. A pressure-limiting valve (10) comprising a valve housing (12) and comprising a valve piston (18) and comprising a pressure-limiting adjusting spring (28), wherein at least one valve inlet (14) and at least one valve outlet (16) are provided in the valve housing (12), wherein the valve piston (18) can assume an open position (B), in which the valve inlet (14) and the valve outlet (16) are connected to one another, and at least one closed position (D), in which the valve inlet (14) and the valve outlet (16) are separated from one another, wherein the valve piston (18) has a first piston ring (20) with a sealing face (40) and has a second piston ring (22),
**characterized in that**
in the closed position (D), the sealing face (40) of the first piston ring (20) is pulled in a sealing manner against a housing lip (24) by a pneumatic force which acts on the first piston ring (20) and second piston ring (22) and which is directed against the force of the pressure-limiting adjusting spring (28), and wherein, furthermore, there is a pneumatic passage (26) in the valve piston (18) for the purpose of creating a safety valve function, which pneumatic passage can be closed by a spring-loaded safety valve body (32) which is arranged on that side of the second piston ring (22) which is opposite the valve outlet (16).

2. The pressure-limiting valve (10) as claimed in claim 1,
**characterized in that**
the safety valve body (32) is spring-loaded by the pressure-limiting adjusting spring (28).

3. The pressure-limiting valve (10) as claimed in claim 1 or claim 2,
**characterized in that**
the safety valve body (32) has a guide (34) which, in a closure position, is guided in a recess (38) of the second piston ring (22).

4. The pressure-limiting valve (10) as claimed in one of the preceding claims, **characterized in that**
the safety valve body (32) bears on the second valve seat (22) by way of a sealing face (44), and in this way closes the pneumatic passage (26) in a sealing manner, at least in the closed position (D).

5. The pressure-limiting valve (10) as claimed in one of the preceding claims, **characterized in that**
the limit pressure, at which the pressure-limiting valve switches to the closed position (D), can be adjusted by means of the pressure-limiting adjusting spring (28) and an adjusting element (46).

6. The pressure-limiting valve (10) as claimed in claim 5,
**characterized in that**
the prestress of the pressure-limiting adjusting spring (28) can be adjusted by means of the adjusting element (46).

7. The pressure-limiting valve (10) as claimed in one of the preceding claims, **characterized in that**
the limit pressure, at which the safety valve body (32) opens the pneumatic passage (26), can be adjusted by means of the pressure-limiting adjusting spring (28) and an adjusting element (46).

8. The pressure-limiting valve (10) as claimed in one of the preceding claims, **characterized in that**
the pneumatic passage (26) is formed by a passage bore through the valve piston (18).

## Revendications

1. Soupape (10) de limitation de la pression, comprenant un corps (12) de soupape et comprenant un piston (18) de soupape et comprenant un ressort (28) de réglage de la limitation de pression, dans lequel une entrée (14) de soupape et au moins une sortie (16) de soupape sont prévues dans le corps (12) de la soupape, dans laquelle le piston (18) de la soupape peut prendre une position (B) d'ouverture, dans laquelle l'entrée (14) de la soupape et la sortie (16) de la soupape communiquent entre elles, et au moins une position (D) de fermeture, dans laquelle l'entrée (14) de la soupape et la sortie (16) de la soupape sont séparées l'une de l'autre, dans laquelle le piston (18) de la soupape a un premier segment (20) de piston, ayant une surface (40) d'étanchéité et un deuxième segment (22) de piston, **caractérisé en ce que**, dans la position (D) de fermeture, la surface (40) d'étanchéité du premier segment (20) de piston est tirée avec étanchéité sur un épaulement (24) du corps par une force pneumatique, qui s'applique au premier segment (20) et au deuxième segment (22) de piston et qui est dirigée en sens contraire de la force du ressort (28) de réglage de limitation de pression, et dans laquelle en outre il y a, dans le piston (18) de la soupape, un passage (26) pneumatique de constitution d'une fonction de soupape de sécurité, qui peut être fermé par un obturateur (32) de sécurité soumis à l'action d'un ressort et disposé du côté de piston, opposé à la sortie (16) de la soupape, du deuxième segment (22).

2. Soupape (10) de limitation de pression suivant la revendication 1,
**caractérisée en ce que**
l'obturateur (32) de sécurité est soumis à l'action d'un ressort par le ressort (28) de réglage de la limitation de pression.

3. Soupape (10) de limitation de pression suivant la revendication 1 ou revendication 2,
**caractérisée en ce que**
l'obturateur (32) de sécurité a un guidage (34) qui, dans une position de fermeture, est guidé dans un évidement (38) du deuxième segment (22) de piston.

4. Soupape (10) de limitation de pression suivant l'une des revendications précédentes,
**caractérisée en ce que**
au moins dans la position (D) de fermeture, l'obturateur (32) de sécurité s'applique par une surface (44) d'étanchéité au deuxième siège (22) de la soupape et ferme ainsi d'une manière étanche le passage (26) pneumatique.

5. Soupape (10) de limitation de pression suivant l'une des revendications précédentes,
**caractérisée en ce que**
la pression limite, à laquelle la soupape de limitation de pression passe dans la position (D) de fermeture, est réglable au moyen du ressort (28) de réglage de la limitation de pression et d'un élément (46) de réglage.

6. Soupape (10) de limitation de pression suivant la revendication 5,
**caractérisée en ce que**
au moyen de l'élément (46) de réglage, la précontrainte du ressort (28) de réglage de la limitation de pression est réglable.

7. Soupape (10) de limitation de pression suivant l'une des revendications précédentes,
**caractérisée en ce que**
la pression limite, à laquelle l'obturateur (32) de sécurité dégage le passage (26) pneumatique, est réglable au moyen du ressort (28) de réglage de la limitation de pression et d'un élément (46) de réglage.

8. Soupape (10) de limitation de pression suivant l'une des revendications précédentes,
**caractérisée en ce que**
le passage (26) pneumatique est constitué par un trou de passage dans le piston (18) de la soupape.
